# EUROPEAN PATENT APPLICATION

(11) **EP 1 956 396 A1**
(43) Date of publication of application: **13.08.2008**
(21) Application number: 06833494.5
(22) Date of filing: 28.11.2006
(51) Int. Cl.: G02B 1/04, G02B 6/255

(54) **METHOD FOR BONDING GLASS MEMBER FOR OPTICAL COMMUNICATION**

(30) Priority: 01.12.2005 JP 2005348176
(71) Applicant: OMRON CORPORATION, Kyoto-shi, Kyoto 600-8530 (JP)
(72) Inventor: NAKAJIMA, Seiji, OMRON Corporation, Kyoto-shi, Kyoto 6008530 (JP); FUKUHARA, Tomohiro, OMRON Corporation, Kyoto-shi, Kyoto 6008530 (JP); OHNISHI, Masayasu, OMRON Corporation, Kyoto-shi, Kyoto 6008530 (JP); YUAN, Bo, TIC CORPORATION, Naka-ku, Nagoya-shi, Aichi 4600022 (JP)
(74) Representative: Brochard, Pascale
(86) International application number: PCT/JP2006/323690
(87) International publication number: WO 2007/063836

(57) **Abstract**

Provided is a method for bonding glass members for optical communication, which can achieve sufficient bonding strength and resistance to separation between the glass member and the adhesive layer.

A method for bonding glass members for optical communication, **characterized by** vaporizing a silane-coupling agent 3 by heating, treating glass members for optical communication (1 and 2) with the silane-coupling agent vapor, and bonding the glass members to each other with an adhesive.

## Description

### Technical Field

The present invention relates to a method for bonding glass members for optical communication.

### Background Art

For improvement of bonding strength in the field of the method for bonding glass members for optical communication, known are methods of bonding glass members to each other with an adhesive after coating the glass members with a solution of a silane-coupling agent at several %, for example, by a method such as blushing, dipping, spin coating or spray coating and then (e.g., Patent Documents 1 to 3).
Patent Document 1: Japanese Unexamined Patent Publication No. 2005-17431
Patent Document 2: Japanese Unexamined Patent Publication No. 2002-333550
Patent Document 3: Japanese Unexamined Patent Publication No. Hei5-224108

### Disclosure of Invention

### Technical Problems to be Solved

However, the methods often resulted in insufficient bonding strength, because the thickness of the silane-coupling agent layer was uneven, consequently leading to separation between the glass member and the adhesive layer. Such a problem was more outstanding, when the glass member was smaller or the surface shape more complicated. In particular, separation between the glass member and the adhesive layer causes a very serious problem in the field of the method for bonding glass members for optical communication, because it leads to distinct light loss due to disconnection of the optical path, prohibiting use of it for optical communication.

An object of the present invention is to provide a method for bonding glass members for optical communication, which can achieve a sufficient bonding strength and resistance to separation between the glass members and the adhesive layer.

### Means to Solve the Problems

The present invention relates to a method for bonding glass members for optical communication, characterized by vaporizing a silane-coupling agent by heating , treating glass members for optical communication with the silane-coupling agent vapor, and then, bonding the glass members with an adhesive.

### Effects of the invention

By the method for bonding glass members for optical communication according to the present invention, characterized by vaporizing a silane-coupling agent by heating and uniformly treating glass members for optical communication with the silane-coupling agent vapor before connection with an adhesive, it is possible to achieve sufficiently high bonding strength and resistance to separation between the glass members and the adhesive layer.

In addition because the silane-coupling agent is vaporized only by heating, even if the glass members for optical communication is a composite member containing an adhesive layer, it is possible to avoid vaporization of the adhesive layer and prevent contamination of the member connection surface. It is thus possible to prevent separation between the glass member and the adhesive layer more reliably.

In particular, when the silane-coupling agent is heated at a temperature of 100°C or higher, preferably 100 to 200°C, more preferably 130 to 200°C, leading to removal of water adsorbed on the glass member surface effectively, it is possible to prevent separation between the glass member and the adhesive layer more distinctively.

Because the glass substrate is treated with the silane-coupling agent in the vapor state according to the method of the present invention, uniform treatment is possible at relative higher concentration (e.g., 100%). Thus, the advantage of the present invention is more obvious when treated at high concentration than at low concentration as practiced conventionally. In addition, if the silane-coupling agent is used at higher concentration, it is possible to prevent hydrolysis of the adhesive by the silane-coupling agent solvent such as acetic acid effectively, and preserve sufficient bonding strength and prevent separation over an extended period of time.

The method according to the present invention is useful in treating flat glass plates as well as irregular-surfaced glass materials in complicated shape. It is also effective in bonding composite members which are prepared by bonding in the previous step.
Because the treatment by the method according to the present invention is simple and effective, it is possible to introduce the step anywhere in the processing process for members, and also to reduce the facility cost for improvement in bonding strength and prevention of separation, because no expensive apparatus is needed additionally.
The method according to the present invention allows simultaneous treating of plural members and thus, has a mass productivity higher than that by other coating methods.

### Brief Description of the Drawings

Figure 1 is a schematic sketch drawing illustrating the silane-coupling agent-treating method described in Example 1A.
Figure 2 is a schematic sketch drawing illustrating the method for producing a fiber array described in Example 1A.
Figure 3 is a schematic sketch drawing illustrating the method for producing a WDM module described in Example 1B.

### Explanation of Numerals

1: Weight plate, 2: V-shape grooved plate, 3: Silane-coupling agent, 4: Tightly sealed container, 5: Fiber, 6: Adhesive layer, 10: Fiber array, 11: Fiber array, 12: optical waveguide, 13: Fiber array, 14: Filter, 15 and 16: Adhesive layer, and 20; WDM module.

### Best Mode for Carrying Out the Invention

In the method for bonding glass members for optical communication according to the present invention, a silane coupling agent is vaporized by heating and glass members for optical communication (hereinafter, referred to simply as "glass members") are treated with a silane-coupling agent vapor. Specifically, a silane-coupling agent is once in the gaseous state by vaporizing the silane-coupling agent and the surface of the glass members are treated, so that a silane-coupling agent layer is formed on the glass member surface.

In the present invention, because the silane-coupling agent layer is formed with the vapor of a silane-coupling agent, it becomes possible to form a uniform layer. As a result, bonding strength is improved and separation between the glass members and the adhesive layer is prevented. The phenomenon of the increase in bonding strength by the method according to the present invention seems to be based on the following mechanism: Conventionally, such a silane-coupling agent layer, which has been prepared by coating, was uneven in its layer thickness. For that reason, an external stress applied to the layer concentrates in a thin region, causing a shearing force between the silane-coupling agent layer and the glass member or the adhesive layer in the region, which in turn causes separation and consequently disconnection. In the present invention, the external stress is diffused favorably, preventing action of the shearing force and thus separation, probably because a relative uniform silane-coupling agent layer is formed.

Conventionally, the thickness of the adhesive layer became uneven when the surface shape of the glass member is complicated, and thus, expansion and contraction of the adhesive layer caused by fluctuation in ambient temperature and humidity often resulted in generation of internal stress, facilitating further separation. However, in the present invention, as described above, the silane-coupling agent layer is at least uniform and resistant to separation, in particular resistant to separation even from such a complicated surface.

Conventionally, when the connection surface of the glass member has two or more areas different in wettability (e.g., adhesive and glass), the separation occurred more frequently. However, in the present invention, it is possible to prevent separation effectively by application of a silane-coupling agent layer uniformly on the connection surface.

In the present invention, the silane-coupling agent is vaporized by heating the silane-coupling agent. When it is vaporized in combination of heating and evacuation of the system, for example if a composite member of two or more glass members bonded to each other with an adhesive is treated, the adhesive also vaporizes, leading to contamination of the glass member connection surface and reduction of the bonding strength. In the present invention, because the silane-coupling agent is vaporized only by heating, it is possible to avoid vaporization of the adhesive and prevent separation between the glass member and the adhesive layer effectively. In addition, vaporization only by heating eliminates contamination of the chamber and pump, and thus allows repeated use of the facility. The absence of the evacuation system allows reduction of the facility cost.

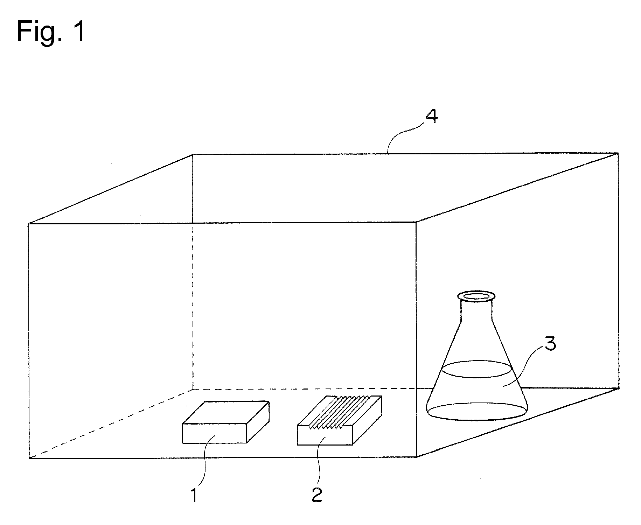

A typical favorable example of the treating method of a silane-coupling agent will be described below. As shown in Figure 1, a silane-coupling agent 3 is vaporized under heat in a tightly sealed container 4 with glass members (1 and 2) placed therein, forming a silane-coupling agent layer on the connection surface of the glass members with the silane-coupling agent vapor. The silane-coupling agent may be heated by heating only the container containing the silane-coupling agent in the tightly sealed container or by heating the entire tightly sealed container.

A temperature of treating the silane-coupling agent, or a heating temperature, is not particularly limited so long as the silane-coupling agent is vaporized, and preferably 100°C or higher, more preferably 100 to 200°C, and still more preferably 130 to 200°C. A heating temperature of 100°C or higher allows removal of water adsorbed on the glass member surface during treatment, to prevent separation between the glass member and the adhesive layer more effectively. In particular, a heating temperature of 130°C or higher removes the water adsorbed on the glass member surface more effectively, to prevent separation between the glass member and the adhesive layer most effectively. An excessively higher heating temperature may fuse the adhesive layer in the composite member in treatment of a composite member.

A treatment period is not particularly limited, so long as the advantageous effects of the present invention are obtained, and favorably, for example, 10 to 600 minutes, particularly preferably 30 to 300 minutes.

The silane-coupling agent treatment is carried out to form a silane-coupling agent layer on at least one of the connection surfaces of the two glass members to be connected with the glass members placed in a tightly sealed container. The glass members are normally placed in the tightly sealed container with the silane-coupling agent layer-forming faces facing upward.

A thickness of the silane-coupling agent layer formed on the connection surface of the glass member is not particularly limited, so long as the advantageous effects of the present invention are obtained.

The glass member for optical communication used in the method according to the present invention may be any glass composition for optical communication, and examples thereof favorable from the viewpoints of productivity and optical properties include quartz, soda-lime glass, borosilicate glass, lead glass, and the like.

Each of the glass members to be connected may be a single glass member, but at least one of them is preferably a composite member of two or more glass members previously bonded to each other with an adhesive. In the present invention, it is possible to avoid vaporization of the adhesive layer and prevent contamination of the member connection surface by vaporizing the silane-coupling agent only by heating, even when a composite member having such an adhesive layer is treated.

The silane-coupling agent is an organic silicon compound having a functional group reactive with organic materials and a functional group reactive with inorganic materials simultaneously in the molecule, and any one of the silane-coupling agent known in the field of glass member-bonding method may be used. The silane-coupling agent is preferably a substance volatile without decomposition at the treatment temperature.

Examples of the silane-coupling agents include acrylic, methacrylic, epoxy, alkyl, styryl, vinyl, amino, ureido, mercapto, sulfide and isocyanato silane-coupling agents, and one or more silane-coupling agents selected therefrom are used . Silane-coupling agents favorable for further improvement in bonding strength include acrylic, methacrylic, epoxy, alkyl, styryl, vinyl and amino silane-coupling agents, and most preferable are acrylic, methacrylic, epoxy, and styryl silane-coupling agents.

The silane-coupling agent may be used as an undiluted solution or as a solution diluted with a solvent such as acetic acid, methanol or ethanol. The concentration of the silane-coupling agent used may be 1 to 100wt %, preferably 80 to 100wt %, particularly 100wt %, for further improvement of the bonding strength. Use of the silane-coupling agent at higher concentration prevents hydrolysis of the adhesive by a solvent such as acetic acid effectively, preserves the bonding strength sufficiently, and prevents separation over a long period of time.

The silane-coupling agent is easily available as a commercial product.
The acrylic silane-coupling agents for use are, for example, KBM5103 or the like manufactured by Shin-Etsu Chemical Co., Ltd.
The methacrylic silane-coupling agents for use are, for example, KBM502, KBM503, KBE502, KBE503, or the like manufactured by Shin-Etsu Chemical Co., Ltd.
The epoxy-based silane-coupling agents for use are, for example, KBM303, KBM403, KBE402, KBE403 or the like manufactured by Shin-Etsu Chemical Co., Ltd.

The alkyl-based silane-coupling agent for use are, for example, KBM703 or the like manufactured by Shin-Etsu Chemical Co., Ltd.
The styryl-based silane-coupling agents for use are, for example, KBM1403 or the like manufactured by Shin-Etsu Chemical Co., Ltd.
The vinyl-based silane-coupling agent for use are, for example, KA1003, KBM1003, KBE1003 or the like manufactured by Shin-Etsu Chemical Co., Ltd.
The amino-based silane-coupling agents for use are, for example, KBM602, KBM603, KBE603, KBM903, KBE903, KBE9103, KBM573, KBM575, KBM6123 or the like manufactured by Shin-Etsu Chemical Co., Ltd.

After the silane-coupling agent layer is formed on glass members by silane-coupling agent treatment, the glass members are bonded to each other with an adhesive. At least one of the connection surfaces of the two glass members to be connected has the silane-coupling agent layer, and, preferably for further improvement of the bonding strength, the two connection surface respectively have the silane-coupling agent layer.

An organic adhesive containing a resin is used as an adhesive. Use of an organic adhesive improves the bonding strength at the interface between the adhesive layer and the silane-coupling agent layer. The organic adhesive is not particularly limited so long as it contains a resin, but is preferably a reactive adhesive containing a resin cured by light or heat. Use of a reactive adhesive, which contains a resin that hardens and reacts with the silane-coupling agent, achieves more effective bonding of the glass members. The reactive adhesive is favorably a photoreactive adhesive, from the viewpoints of hardening velocity and thermal expansion and contraction during hardening.

Examples of the photoreactive adhesives for use include acrylic, methacrylic, epoxy, urethane acrylic, and oxetane-based photoreactive adhesives, and one or more compounds selected from the group of the compounds above are used. The kind of the photoreactive adhesive is preferably selected according to the kind of the silane-coupling agent, for further improvement of the bonding strength.

For example, when an acrylic, methacrylic, styryl, or vinyl silane-coupling agent is used, an acrylic or methacrylic photoreactive adhesive is preferably used.
For example when an epoxy silane-coupling agent is used, an epoxy or oxetane-based photoreactive adhesive is preferably used.
For example when an alkyl, amino, acrylic, or methacrylic silane-coupling agent is used, an urethane acrylic, acrylic or methacrylic photoreactive adhesive is preferably used.

In the method for bonding glass members for optical communication, an acrylic, methacrylic, epoxy, urethane-acrylic or oxetane-based photoreactive adhesive, in particular an acrylic, methacrylic, epoxy, or urethane-acrylic photoreactive adhesive, is more preferably used, from the viewpoint of the balance between optical properties and bonding strength. Although the photoreactive adhesive does not impair optical properties such as refractive index, its adhesive strength with inorganic material is not always high. It is possible in the present invention to obtain sufficient adhesive strength with inorganic materials while preserving favorable optical properties, even with such a photoreactive adhesive. The glass transition point of the curing resin of the photoreactive adhesive is generally, approximately 200°C or lower.

The photoreactive adhesive is easily available as a commercial product.
Examples of the acrylic, methacrylic, and urethane acrylic photoreactive adhesives for use include AbleuxOGR150 THTG, manufactured by Ablestik, ES89 manufactured by Adell Corporation, and the like.
Examples of the epoxy photoreactive adhesives include AT3925 M manufactured by NTT-AT and the like.
Examples of the oxetane photoreactive adhesives include UX-0110 and UX-0120 manufactured by Toagosei Co., Ltd. and the like.

Bonding is normally made by coating an adhesive on the connection surface of at least one glass member to be connected, connecting the glass members to each other, and drying the resulting bonded composite. In particular when a photoreactive adhesive is used, it is preferable that bonding is performed by filling the gap between two glass members fixed in advance with an adhesive and hardening the adhesive sufficiently by irradiation of a light such as ultraviolet ray.

The adhesive can be coated, for example, by a method such as brushing, dipping, spin coating, or spray coating.

The method for bonding glass members for optical communication according to the present invention is more effective, when the glass members are smaller and/or the surface shape of the glass members is more complicated. When the glass members are smaller or the surface shape is complicated, the thickness of the adhesive layer and the silane-coupling agent layer became uneven conventionally, causing easy separation between the silane-coupling agent layer and the glass member or adhesive layer, but, according to the present invention, it is possible to prevent the separation effectively even in such a above case.

Because the method for bonding glass members for optical communication according to the present invention can achieve excellent bonding strength and prevent separation leading to drastic decrease in optical properties, devices for optical communication, such as fiber array, WDM module, lens fiber array, and optoisolator, that show no light loss, can be prepared effectively. The devices for optical communication prepared by the method for bonding glass members for optical communication according to the present invention are superior in moisture resistance and protected from separation over an extended period of time.

### EXAMPLES

### Test Example A

### (Example 1A: Fiber array)

### - Silane-coupling agent treatment of members

As shown in Figure 1, a weight glass plate 1 and a V-shape grooved glass plate 2 were placed, together with a small bottle containing a silane-coupling agent (manufactured by Shin-Etsu Chemical Co., Ltd.; KBE403) 3, in a container 4, which was then tightly sealed. The internal temperature was then kept 140°C for 30 minutes, allowing processing with the silane-coupling agent.

### - Assembly of members

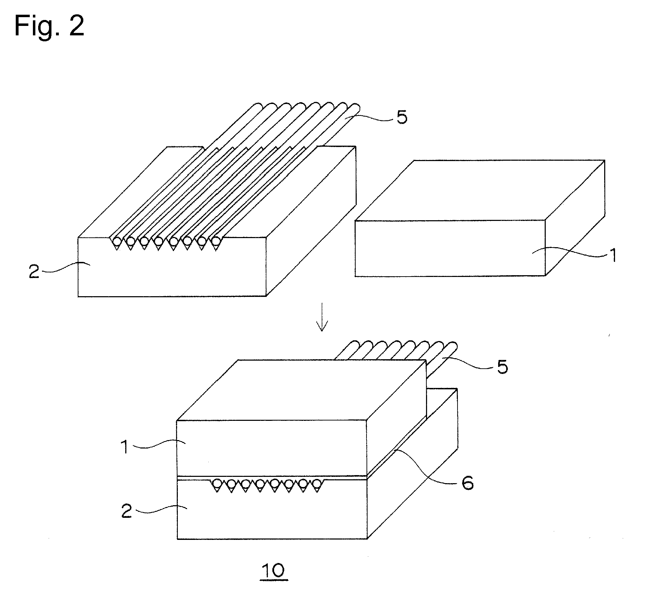

As shown in Figure 2, the weight plate 1 and the plate 2 after treatment with the silane-coupling agent were taken out of the container. Ribbon fibers 5 were placed in the V-shaped grooves of the plate 2. The silane-coupling agent layer is not shown in the Figure. Then, the weight plate 1 was placed thereon; an adhesive (AT3925 M, epoxy-based, manufactured by NTT-AT) 6 was filled into the gap between the plates 1 and 2 and cured sufficiently by ultraviolet irradiation, to give a fiber array 10. The plate 1 was used in such a way as the top face thereof in the tightly sealed container was in contact with the adhesive.

### (Example 2A; Fiber array)

A fiber array was obtained in a similar manner to Example 1A, except that the internal temperature in silane-coupling agent treatment was 110°C and the heating period was 30 minutes.

### (Example 3A; fiber array)

A fiber array was obtained in a similar manner to Example 1A, except that the internal temperature in silane-coupling agent treatment was 90°C and the heating period was 30 minutes.

### (Comparative Example 1A; fiber array)

A fiber array was obtained in a similar manner to Example 1A, except that the silane-coupling agent layer was not formed.

### (Comparative Example 2A; fiber array)

A fiber array was obtained in a similar manner to Example 1A, except that the silane-coupling agent layer was formed by applying by spray the contact surface (connection surface) of the plate 1 in contact with the adhesive and the V-shape grooved face of the plate 2 with an acetic acid solution containing the silane-coupling agent at 2 wt %, and drying the treated plates at room temperature.

### (Evaluation)

Twenty fiber arrays were formed in each Example or Comparative Example; arrays having even a small separated region was judged separated; and the number of separated samples was determined by visual observation. Specifically, the samples were observed under a metal microscope at magnification of 10 times. Then, the samples were placed in an oven, held at the heating temperature shown in the Table for 30 minutes, and the number of separated samples was determined. The separation ratio used was the ratio defined by "number of separated samples/number of test samples". The heating temperature shown in the Table is the test temperature, and a smaller separation at higher temperature indicates favorable adhesion.

**[Table 1]**

| Separation ratio in heated test (%) | | | | |
|---|---|---|---|---|
| Heating temperature during test | After connection | 100°C | 120°C | 140°C |
| Example 1A (According to the silane-coupling treatment method of the present invention at 140°C) | 0% (0/20) | 0% (0/20) | 0% (0/20) | 0% (0/20) |
| Example 2A (According to the silane-coupling treatment method of the present invention at 110°C) | 0% (0/20) | 0% (0/20) | 10% (2/20) | 25% (5/20) |
| Example 3A (According to the silane-coupling treatment method of the present invention at 90°C) | 0% (0/20) | 10% (2/20) | 50% (10/20) | 75% (15/20) |
| Comparative Example 1A (Without silane-coupling treatment) | 70% (14/20) | 100% (20/20) | 100% (20/20) | 100% (20/20) |
| Comparative Example 2A (Silane-coupling agent spray coating) | 30% (6/20) | 55% (11/20) | 75% (15/20) | 100% (20/20) |

Air bubbles are generated and separation occurred between the plates 1 and 2 in Comparative Examples 1A and 2A immediately after connection, but there was no air bubbles generated at all in Examples 1A to 3A.
The results in Examples 1A to 3A indicate that high internal temperature during treatment leads to fewer generation of separation.

### Test Example B

### (Example 1B; WDM module)

### - Silane-coupling agent treatment of members

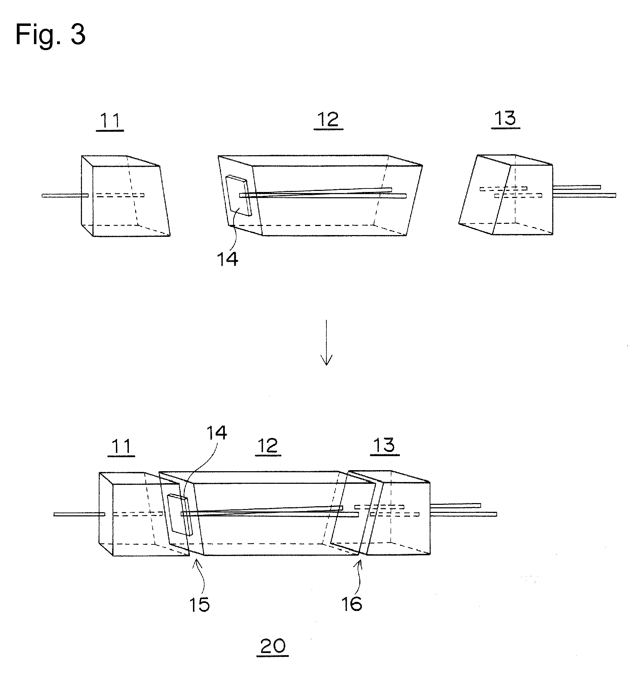

A fiber array 11, an optical waveguide 12 connected to a filter 14, and a fiber array 13 shown in Figure 3 were treated with a silane-coupling agent in a similar manner to Example 1A, except that another silane-coupling agent (KBM5103, manufactured by Shin-Etsu Chemical Co., Ltd.) was used. Each member has a silane-coupling agent layer formed on at least on the face to be in contact with the adhesive described below. The filter 14 is previously bonded to the optical waveguide 12 with an adhesive.

### - Assembly of members

As shown in Figure 3, the members 11, 12, and 13 after silane-coupling agent treatment (140°C, 30 minutes) were taken out and aligned; an adhesive (Ableux OGR150THTG, acrylate-based, manufactured by Ablestik) was filled into a space 15 between members 11 and 12 and a space 16 between members 12 and 13 and cured sufficiently by ultraviolet irradiation, to give a WDM module 20.

### (Example 2B; WDM module)

A WDM module was obtained in a similar manner to Example 1B, except that the internal temperature was 110°C and the heating period was 30 minutes in the silane-coupling agent treatment.

### (Example 3B; WDM module)

A WDM module was obtained in a similar manner to Example 1B, except that the internal temperature was 90°C and the heating period was 30 minutes in the silane-coupling agent treatment.

### (Comparative Example 1B; WDM module)

A WDM module was obtained in a similar manner to Example 1B, except that the silane-coupling agent layer was not formed.

### (Comparative Example 2B; WDM module)

A WDM module was obtained in a similar manner to Example 1B, except that a silane-coupling agent layer was formed by applying by spray-an acetic acid solution containing a silane-coupling agent at 2 wt % to the surface of the members 11, 12 and 13 to be in contact with an adhesive (connection surface) and drying the coat layers at room temperature.

### (Comparative Example 3B; WDM module)

A WDM module was obtained in a similar manner to Example 1B, except that the tightly sealed container was kept under reduced pressure at 0.1 MPa and 90°C for 30 minutes during the silane-coupling agent treatment.

### (Evaluation)

The separation ratio of each of the test samples obtained was evaluated in a similar manner to Test Example A.

**[Table 2]**

| Separation ratio in heated test (%) | | | | |
|---|---|---|---|---|
| Heating temperature during test | After connection | 100°C | 140°C | 170°C |
| Example 1 B (According to the silane-coupling treatment method of the present invention at 140°C) | 0% (0/20) | 0% (0/20) | 0% (0/20) | 0% (0/20) |
| Example 2B (According to the silane-coupling treatment method of the present invention at 110°C) | 0% (0/20) | 0% (0/20) | 15% (3/20) | 45% (9/20) |
| Example 3B (According to the silane-coupling treatment method of the present invention at 90°C) | 0% (0/20) | 15% (3/20) | 30% (6/20) | 70% (14/20) |
| Comparative Example 1 B (Without silane-coupling treatment) | 65% (13/20) | 65% (13/20) | 80% (16/20) | 100% (20/20) |
| Comparative Example 2B (Spray coated with silane-coupling agent) | 55% (11/20) | 60% (12/20) | 70% (14/20) | 100% (20/20) |
| Comparative Example 3B (Coated with silane-coupling treatment under reduced pressure) | 40% (8/20) | 80% (16/20) | 100% (20/20) | 100% (20/20) |

Air bubbles are generated and separation occurred between the plates 1 and 2 in Comparative Examples 1B and 3B immediately after connection, but there was no air bubbles generated at all in Examples 1B to 3B.
The results in Examples 1B to 3B indicate that high internal temperature during treatment leads to fewer generation of separation.
The results in Comparative Example 3B indicate that reduction in pressure during silane-coupling agent treatment results in easier separation. Comparative Example 3B showed whitening on the member surface caused by the volatile components probably due to the adhesive used in the previous step.

### Industrial Applicability

The method for bonding glass members for optical communication according to the present invention is particularly useful, for example, in preparing devices for optical communication, such as fiber array, WDM module, lens fiber array, and optoisolator and also in producing other optical devices demanding glass connection such as beam splitter, macromatic lens and Glan-Thompson prism.

## Claims

1. A method for bonding glass members for optical communication, comprising;
vaporizing a silane-coupling agent by heating,
treating glass members for optical communication with the silane-coupling agent vapor, and
bonding the glass members to each other with an adhesive.

2. The method for bonding glass members for optical communication according to Claim 1, wherein the heat-treatment temperature is 100 to 200°C.

3. The method for bonding glass members for optical communication according to Claim 1 or 2, wherein the silane-coupling agent is vaporized only by heating.

4. The method for bonding glass members for optical communication according to Claim 1, wherein the silane-coupling agent is a silane-coupling agent selected from the group consisting of acrylic, methacrylic, epoxy, alkyl, styryl, vinyl and amino silane-coupling agents.

5. The method for bonding glass members for optical communication according to Claim 1, wherein the silane-coupling agent is used at a concentration of 80 to 100 wt %.

6. The method for bonding glass members for optical communication according to Claim 1, wherein the adhesive is a photoreactive adhesive selected from the group consisting of acrylic, methacrylic, epoxy, urethane acrylic and oxetane-based photoreactive adhesives.

7. The method for bonding glass members for optical communication according to Claim 1, wherein the glass member is made of quartz, soda-lime glass, borosilicate glass or lead glass.

8. The method for bonding glass members for optical communication according to Claim 1, wherein at least one of the glass members for optical communication to be connected is a composite member of two or more glass members previously bonded to each other with an adhesive.
